# EUROPEAN PATENT APPLICATION

(11) **EP 2 708 947 A2**
(43) Date of publication of application: **19.03.2014**
(21) Application number: 13163206.9
(22) Date of filing: 10.04.2013
(51) Int. Cl.: G03B 17/56

(54) **A damping control handle having a shutter cable for fastening a ball type head for camera and a ball type head using the same**

(30) Priority: 17.09.2012 CN 201220473303 U
(71) Applicant: Vanguard Europe, 3601 Kayl (LU)
(72) Inventor: Lee, Lihwa, Nanhai Foshan City Guangdong (CN)
(74) Representative: Lenne, Laurence

(57) **Abstract**

A damping control handle for fastening a ball type head, comprising, a handle 10 and a housing 3 forming a cavity, and a shutter cable 9 that is fixed to the cavity and extend out from the housing with a date line interface of the shutter cable extends out through the handle is disclosed which is advantages in that with the handle connected to the ball type head, the head can be operated with one hand of the user where the other hand of the user can be used for operating the camera for taking pictures.

## Description

### TECHNICAL FIELD

The subject application generally relates to a components for a ball type head for camera, particularly relates to a damping control handle having a shutter for fastening a ball type head and a head incorporating such a damping control handle.

### BACKGROUND ART

During photographing or video taping, a photographer normally requires using one of his hands for adjusting the focus of the lens where the other hand has to adjust the head to a desired angle so as to acquired a desired frame. However, it is the drawback with the head of this type that, user has to move his hand from the head to the camera to press the shutter button, although the time need for an experienced photographer for moving his hand from the head, particularly handle of the head to the camera, this transience may result in lose of interested picture. Moreover, moving photographer's hand from the head to the camera may result in vibration of camera and an additional time may be necessary to wait until the camera to restore still.

### SUMMARY OF INVENTION

One aspect of the invention is to address the above mentioned technical problem in the prior art by providing a damping control handle for fastening a ball type head, comprising a handle and a housing forming a cavity, and a shutter that is fixed to the cavity and extend out from the housing with a date line interface of the shutter extends out through the handle.

Preferably, the shutter comprises a shutter cable, three spring plates, and a shutter button; the shutter cable is disposed within a seat of the handle, the shutter cable comprises a data line interface and three lines extend through the data line interface, wherein two lines of the shutter cable for accomplishing focusing is electrically connected to a second spring plate and to a third spring plate, and with another line electrically connected to the first spring plate; one ends of the three spring plates are fixedly connected to the handle, and the other ends of the three spring plates are free ends which are left unconnected, the three spring plates are spaced from each other; and the shutter button being disposed on the housing in a position relative to the three spring plates such that when the button is slightly pressed inwards, the second spring plate electrically contacts the third spring plate to complete focusing function, with the button being pressed further inwards all three spring plates will be in electrical contact to finish the picture taking function.

Preferably, the first spring plate, the second spring plate and the third spring plate are arranged along the direction of the center axial of the shutter button with decreasing distance to the shutter button.

Preferably, the second and the third spring plates are arranged to form a declining height gradient from the first spring plate to the third spring plate; the base for mounting the spring plates shall be provided with three steps; the first spring plate, the second spring plate and the third spring plate are fixed onto respective upright surfaces of a first step, a second step and a third step; the base for the spring plates is attached to the handle.

Preferably, the handle have a connecting rib arranged along the center axial of the seat on which the three spring plates can be fixedly connected, the housing is substantially enclosing the connecting rib and a cavity for accommodating the three spring plates and the shutter cable is formed between the housing and the connecting rib.

Preferably, the shutter button comprises a button body and a paddle, the button body is fitted to the housing, the paddle is mounted on a first end of the button body that extends into the housing; the first end of the button body is provided with a threaded hole through which the paddle can be mounted thereon; the shutter button and the three spring plates are positioned such that when the button body is pushed to a first position, the second spring plate and the third spring plate are electrically contacted through the paddle, and when the button body is further pressed to a second position, the paddle can electrically connected all three spring plate.

Preferably, the button body can be fitted into an opening in a pushing piece; a stem shaped portion of the button body passes through the opening in the pushing piece and an opening in the housing extends into the housing; the pushing piece is in slide fit connection with a sliding slot provided on the housing along a first direction which is perpendicular to the center axial of the button body so that the shutter button can move together with the pushing piece; the housing is provided in its internal wall a blocker which is positioned such that when the pushing piece is at the bottom end of the sliding slot the paddle is arranged below the blocker, in the situation that the paddle is arranged below the blocker and the three spring plates are in electrical contact with each other, with the pushing piece being pushed to the top end of the sliding slot, the paddle contacts a surface of the first spring plate that is opposite to the blocker, and electrically contact of the three spring plates can be maintained even when the button body is released.

Preferably, the paddle is provided with a paddle body connected to the stem portion of the button body; an upmost portion of the paddle body can be bent towards the first spring plate to form a bent portion for electrically contacting the first spring plate, a lowest portion of the paddle can be bent towards a third direction which is opposite to the second direction to form a hook portion having a tip end facing the third spring plate that can electrically contact the first spring plate with the pushing piece being pushed to the top end of the sliding slot.

Preferably, the housing is provided with an edge portion which support against the pushing piece when the pushing piece is being pushed to the bottom end of the sliding slot.

Another aspect of the invention is to provide a ball type head that can address the problems with the prior art as mentioned.

The type head can comprises the damping control handle for fastening a ball type head according any of aforementioned, wherein the damping control handle is connected with the ball type head via a bolt and a threaded hole in a ball type head.

By replacing traditional damping control knob with the handle in any embodiments of this invention, the head can be operated with one hand of the user where the other hand of the user can be freed for operating the camera for taking pictures. B mode function can be achieved by arranging the shutter button on a pushing piece B mode function operation can be incorporated into the handle.

### DRAWINGS

FIG 1 illustrates a sectional view of a damping control handle for fastening ball type head according to one embodiment of the invention;
FIG 2 illustrates an exploded view of a damping control handle for fastening ball type head according to one embodiment of the invention;
FIG 3 illustrates a structural view of the handle;
FIG 4 illustrates a head incorporating the damping control handle in any of FIG 1 to FIG 3 according to one embodiment of the invention.

### PREFERRED EMBODIMENTS

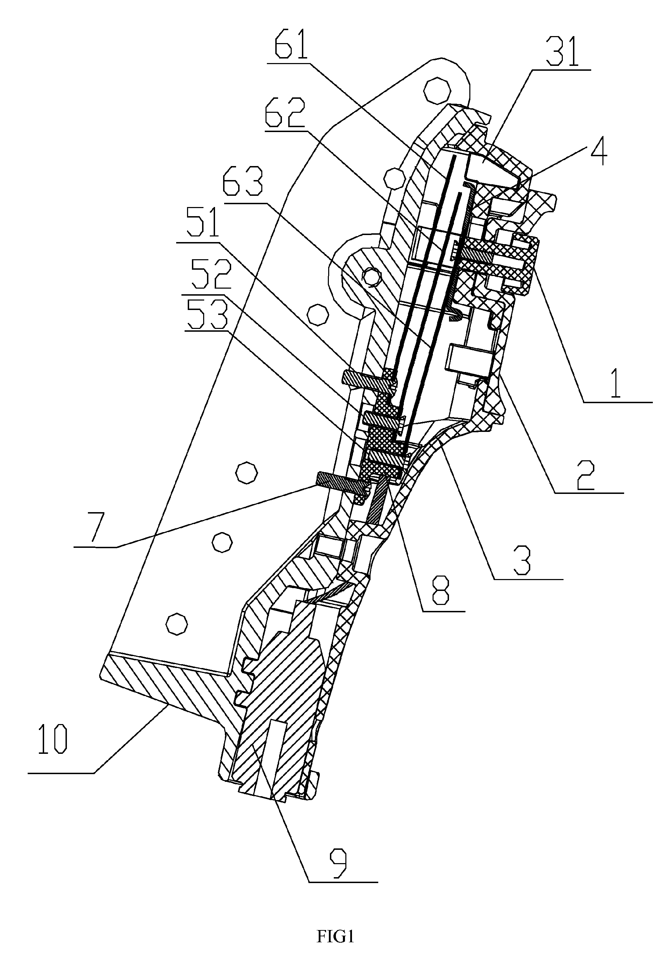

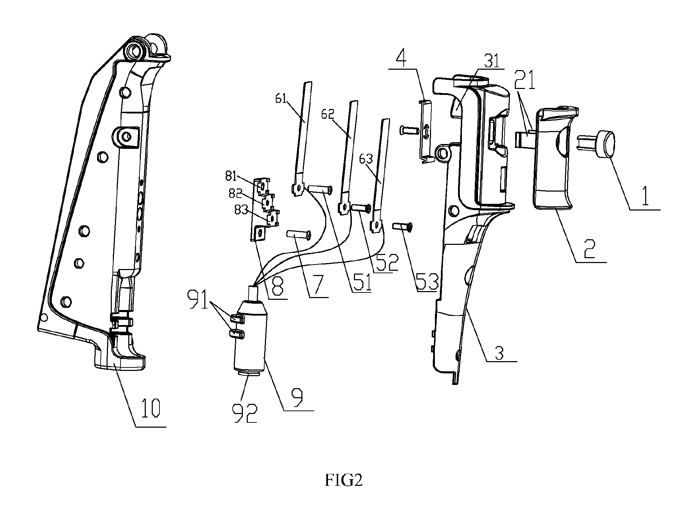

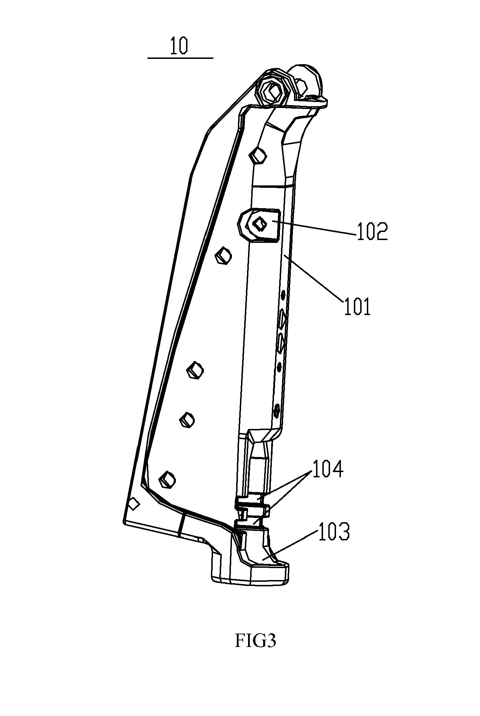

According to FIG 1 and FIG 2, one embodiment of a damping control handle for fastening a ball type head comprises a handle 10, a housing 3 and a shutter. The shutter can comprises a shutter cable 9, three spring plates, i.e. a first spring plate 61, a second spring plate 62 and a third spring plate 63, and a shutter button. The shutter cable 9 is disposed within a seat 103 of the handle 10 as shown in FIG 3. A data line interface of the shutter cable extends out through the seat, the two lines of the shutter cable 9, i.e. a first line and a second line used for accomplishing focusing is electrically connected with a second spring plate 62 and to a third spring plate 63, and with another line, i.e. a third line, electrically connected to the first spring plate 61, so that the three lines are directed from the shutter cable to connect to a terminal of the shutter data interface on the camera. In this embodiment, one ends of the three spring plates (61, 62, 63) are fixedly connected to the handle 10 via an adapter 8, and the other ends of the three spring plates are free ends which are left unconnected, the three spring plates are spaced from each other, e.g. at regular intervals. The housing 3 is fitted on the handle 10, and the shutter button is disposed on the housing in a position relative to the three spring plates such that when the button is slightly pressed inwards, the second spring plate electrically contacts the third spring plate to complete focusing function, and the button being pressed further inwards all three spring plates will be in electrical contact to finish the picture taking function. Here, the structure and actuation of the shutter button can be similar to that for a shutter button on a traditional still photo camera, i.e. slightly press of the button and further press the button.

The first spring plate 61, the second spring plate 62 and the third spring plate 63 are arranged along the direction of the center axial of the shutter button with decreasing distance to the shutter button so that when the shutter button is pressed inwards, the second spring plate is brought to contact the third spring plate at first, with further actuation of the shutter button, i.e. with the button being further pressed inwards, the first spring plate 62 is also contacted by the second and the third spring plate.

As shown in FIG 1, the first, the second and the third spring plates are arranged to form a declining height gradient from the first spring plate to the third spring plate so that electrical connection between the second and the third spring plate, as well as among all three spring plates can be substantially formed, preferably by means of additional intermediate connecting member, whereby reliability of the connections are guaranteed. One implementation of the height gradient is to use spring plates with different length; however, in this embodiment another implementation is adopted where spring plates provided have identical length to allow these spring plates being interchangeable. Correspondingly, the base 8 for mounting the spring plates shall be provided with three steps. Specifically, the first spring plate 61, the second spring plate 62 and the third spring plate 63 are fixed onto respective upright surfaces, i.e. perpendicular to the axial direction of the shutter button, of a first step 81, a second step 82 and a third step 83. The base 8 for the spring plates is attached to the handle 10 by an anchor portion downwardly projected from the first step and a screw 7, i.e. the screw 7 passes through the anchor portion and fixedly connects the base 8 to the handle 10 through threaded connection. The first, the second and the third spring plates 61, 62 , 63 can be fixedly connected to the first step 81 the second step 82 and the third step 83 via respective screws 51, 52 and 53, in this embodiment, as the dimension along the center axial of the shutter button for the first step is larger than that for the second step and than that for the third step, a hole in the first step allows for the screw 51 to pass through is a threaded hole, where respective holes in the second step and the third step for the screws 52 and 53 to pass through are unthreaded hole, therefore, the screw 51 and 52 pass through holes in the second and the third step and connect to the handle via threaded connected, where screw 53 is in threaded connected with the first step.

From FIG 2, the exterior wall of the shutter cable can be provide with, for example, two limiters 91, each of the limiters 91 can be configured to be in a shape that is complementary to the groove 104 on the handle 10 so that when the limiters and the grooves are brought together, the position shutter cable can be securely positioned.

To facilitate assembling of the shutter, the handle 10 can be so designed to have a connecting rib 101 arranged along the center axial of the seat 103 on which the three spring plates can be fixedly connected, for example, via the base 8. In a preferred embodiment, it is the shutter cable 9 that is clamped by the seat 103 and the connecting rib 101 so that the three spring plates are positioned above the shutter cable 9. The housing 3 is substantially enclosing the connecting rib 101 and a cavity for accommodating the three spring plates 61, 62, 63 and the shutter cable 9 is formed between the housing 3 and the connecting rib 101, i.e. the housing can be configured to enclose the three spring plates, the shutter cable 9 and the base 8. In this embodiment, connecting ears 102 are provided on the connecting rib 101 and the housing is connected to the handle 10 through these ears 102 by screws.

To guarantee reliable connection of the three spring plates even when they are subject to external pressures, the shutter button can comprise a button body 1 and a paddle 4 i.e. the above mentioned intermediate connecting member, the button body 1 is fitted to the housing 3, the paddle 4 is mounted on a first end of the button body 1 that extends into the housing. In this embodiment, the first end of the button body is provided with a threaded hole through which the paddle 4 can be mounted thereon. The shutter button and the three spring plates are positioned such that when the button body is pushed to a first position, the second spring plate and the third spring plate are electrically contacted through the paddle, and when the button body is further pressed to a second position, the paddle can electrically connected all three spring plate.

In order to provide B mode function, i.e. Bulb mode exposure function, for the shutter in this invention, the button body can be fitted into an opening in a pushing piece 2. A stem shaped portion of the button body passes through the opening in the pushing piece and an opening in the housing extends into the housing. The pushing piece 2 is in slid fit connection with a sliding slot provided on the housing along a first direction which is perpendicular to the center axial of the button body 1 so that the shutter button can move together with the pushing piece 2. The housing is provided in its internal wall with a blocker 31 which is positioned such that when the pushing piece 2 is at the bottom end of the sliding slot the paddle 14 is arranged below the blocker, in the situation that the paddle 4 is arranged below the blocker 31 and the three spring plates are in electrical contact with each other (i.e. picture taking function is activated when the paddle is at bottom end of the slot), with the pushing piece 2 being pushed to the top end of the sliding slot, the paddle contact a surface of the first spring plate 61 that is opposite to the blocker 31, and electrically contact of the three spring plates can be maintained even when the button body is released, whereby the B mode function is achieved. In this embodiment, the sliding slot can be an opening, and the pushing pieces can be provided with two pads for engaging the respective sidewalls of the sliding slot opening, the paddle is disposed between the two pads.

To achieve reliable electrical contacts between the paddle 4 and the respective spring plates 61, 62 and 63, the paddle 4 can be provided with a paddle body connected to the stem portion of the button body. An upmost portion of the paddle body can be bent towards the first spring plate 61, i.e. towards a second direction, to form a bent portion for electrically contacting the first spring plate 61, a lowest portion of the paddle can be bent towards a third direction which is opposite to the second direction to form a hook portion having a tip end facing the third spring plate 63 that can electrically contact the first spring plate 63 with the pushing piece 2 being pushed to the top end of the sliding slot, i.e. the hook portion is in connection with the third spring plate via the tip end. For the paddle 4 having this configuration, when the pushing piece 2 is pushed to the bottom end of the sliding slot, the paddle 4 can be brought into electrical contact with both the second spring plate 62 and the third spring plate 63 at a first actuation of the shutter button, e.g. being slightly pressed inwards, and with the button being actuated further, e.g., being pressed further inwards, both the second and the third spring plates 62, 63 are brought into electrical contact with the paddle body so that the first spring plate 61 is brought into the electrical contact with the bent portion. When the pushing piece 2 is pushed to the top end of the sliding slot, the second spring plate 62 is brought into electrical contact with the paddle body, the first spring plate 61 is brought into electrical contact with the bent portion and the third spring plate 63 is brought into electrical contact with the hook portion.

According to FIG 2, the housing is provided with an edge portion which support against the pushing piece 2 when the pushing piece is being pushed to the bottom end of the sliding slot.

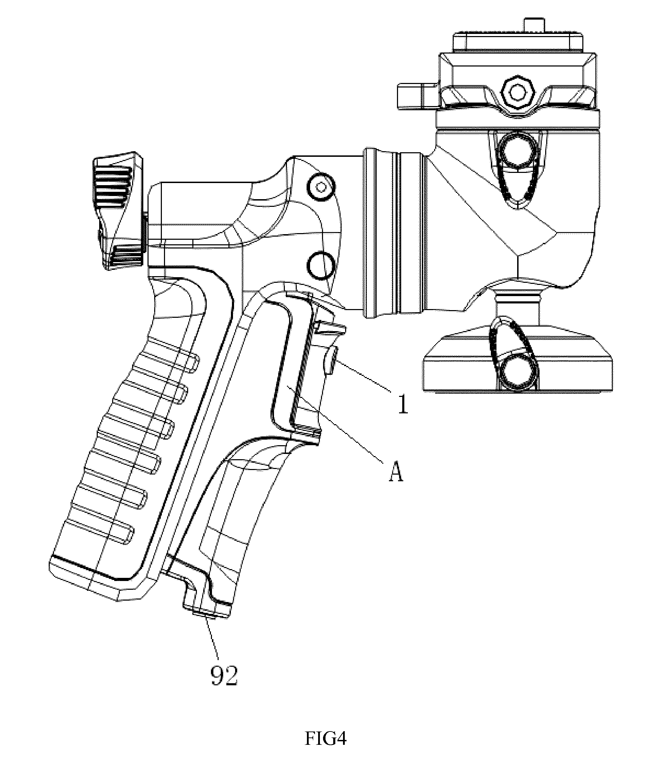

According to FIG 4, a damping control handle A for a ball type head can be used to replace the traditional damping control handle, that is, a new head according to the present invention can be achieved by connecting the damping control handle A via a bolt to a threaded hole in a ball type head. The ball type head according to the present invention can be operated in the following manner: connecting a camera to a shutter data interface 92 of a shutter cable via a data line attached with the camera so that the head can be operated with one hand of the user where the other hand of the user can be used for operating the camera for taking pictures at a result. During operation of the head, when the handle is grasped and is swiveled clockwise can result in reduction of damping, after an desired swiveling angle is reached, the handle 10 is released whereby the head is fastened, at this time, the shutter button can be slightly pressed to trigger focusing of the camera, further pressing the button can trigger picture taking. If B mode function is to be used, the pushing piece 2 shall be pushed to the top end of the sliding slot while keep the button being held in the place that can trigger picture taking, the B mode function can be deactivated by downward slide of the pushing piece 2.

While only certain embodiments of the invention have been specifically described herein, it will be apparent that numerous modifications may be made thereto without departing from the spirit and scope of the present claims.

## Claims

1. A damping control handle for fastening a ball type head, comprising, a handle and a housing forming a cavity, and a shutter that is fixed to the cavity and extend out from the housing with a date line interface of the shutter extends out through the handle.

2. The damping control handle for fastening a ball type head according to claim 1, wherein the shutter comprises a shutter cable, three spring plates, and a shutter button; the shutter cable is disposed within a seat of the handle, the shutter cable comprises a data line interface and three lines extend through the data line interface, wherein two lines of the shutter cable for accomplishing focusing is electrically connected to a second spring plate and to a third spring plate, and with another line electrically connected to the first spring plate; one ends of the three spring plates are fixedly connected to the handle, and the other ends of the three spring plates are free ends which are left unconnected, the three spring plates are spaced from each other; and the shutter button being disposed on the housing in a position relative to the three spring plates such that when the button is slightly pressed inwards, the second spring plate electrically contacts the third spring plate to complete focusing function, with the button being pressed further inwards all three spring plates will be in electrical contact to finish the picture taking function.

3. The damping control handle for fastening a ball type head according to claim 2, wherein the first spring plate, the second spring plate and the third spring plate are arranged along the direction of the center axial of the shutter button with decreasing distance to the shutter button.

4. The damping control handle for fastening a ball type head according to claim 3, wherein the first, the second and the third spring plates are arranged to form a declining height gradient from the first spring plate to the third spring plate; the base for mounting the spring plates shall be provided with three steps; the first spring plate, the second spring plate and the third spring plate are fixed onto respective upright surfaces of a first step, a second step and a third step; the base for the spring plates is attached to the handle.

5. The damping control handle for fastening a ball type head according to claim 2, wherein the handle have a connecting rib arranged along the center axial of the seat on which the three spring plates can be fixedly connected, the housing is substantially enclosing the connecting rib and a cavity for accommodating the three spring plates and the shutter cable is formed between the housing and the connecting rib.

6. The damping control handle for fastening a ball type head according to claim 5, wherein the shutter button comprises a button body and a paddle, the button body is fitted to the housing, the paddle is mounted on a first end of the button body that extends into the housing; the first end of the button body is provided with a threaded hole through which the paddle can be mounted thereon; the shutter button and the three spring plates are positioned such that when the button body is pushed to a first position, the second spring plate and the third spring plate are electrically contacted through the paddle, and when the button body is further pressed to a second position, the paddle can electrically connected all three spring plate.

7. The damping control handle for fastening a ball type head according to claim 6, wherein the button body can be fitted into an opening in a pushing piece; a stem shaped portion of the button body passes through the opening in the pushing piece and an opening in the housing extends into the housing; the pushing piece is in slide fit connection with a sliding slot provided on the housing along a first direction which is perpendicular to the center axial of the button body so that the shutter button can move together with the pushing piece; the housing is provided in its internal wall a blocker which is positioned such that when the pushing piece is at the bottom end of the sliding slot the paddle is arranged below the blocker, in the situation that the paddle is arranged below the blocker and the three spring plates are in electrical contact with each other, with the pushing piece being pushed to the top end of the sliding slot, the paddle contacts a surface of the first spring plate that is opposite to the blocker, and electrically contact of the three spring plates can be maintained even when the button body is released.

8. The damping control handle for fastening a ball type head according to claim 7 wherein the paddle is provided with a paddle body connected to the stem portion of the button body; an upmost portion of the paddle body can be bent towards the first spring plate to form a bent portion for electrically contacting the first spring plate, a lowest portion of the paddle can be bent towards a third direction which is opposite to the second direction to form a hook portion having a tip end facing the third spring plate that can electrically contact the first spring plate with the pushing piece being pushed to the top end of the sliding slot.

9. The damping control handle for fastening a ball type head according to claim 7 wherein the housing is provided with an edge portion which support against the pushing piece when the pushing piece is being pushed to the bottom end of the sliding slot.

10. A ball type head, comprising the damping control handle for fastening a ball type head according any of claim 1 to 9, wherein the damping control handle is connected with the ball type head via a bolt and a threaded hole in a ball type head.
